# EUROPEAN PATENT APPLICATION

(11) **EP 3 747 259 A1**
(43) Date of publication of application: **09.12.2020**
(21) Application number: 19213477.3
(22) Date of filing: 04.12.2019
(51) Int. Cl.: A01G 9/02, A41G 1/00

(54) **INTEGRATED ARTIFICIAL PLANT WALL AND METHOD FOR PREPARING SAME**

(30) Priority: 04.06.2019 CN 201910482270
(71) Applicant: Zhejiang Minzo New Materials Co., Ltd., 317200 Taizhou Zhejiang (CN)
(72) Inventor: XU, Cungao, Taizhou, Zhejiang 317206 (CN); LIU, Wenbin, Yichun, Jiangxi (CN)
(74) Representative: Sun, Yiming

(57) **Abstract**

The invention concerns an integrated artificial plant wall, comprising a number of base frames (1) which can be mutually spliced and a number of artificial plants (2), wherein the artificial plants (2) are connected to the base frames (1) via connecting rods (3), and the base frames (1), the artificial plants (2) and the connecting rods (3) are of an integrated structure. The invention also concerns a method for preparing an integrated artificial plant wall.

## Description

### TECHNICAL FIELD

The present invention belongs to the technical field of artificial plant walls and relates to an integrated artificial plant wall and a method for preparing same.

### BACKGROUND ART

Artificial plant walls are walls with high-imitation artificial plant arrangement, which utilize the similar appearances of high-imitation artificial plants and real plants to achieve an effect similar to that of a real plant wall or achieve an effect that the real plants cannot achieve, thus meeting people's pursuit of a natural effect. According to different environmental requirements, wall styles which are different in shape, well-spaced in height and in harmony with the surroundings have been designed and can be well-designed to achieve the effect of looking like real. The artificial plant walls do not need maintenance, have durable effects, are easy to show design effects, are well-arranged in structure and low in cost, and have many varied effects.

An existing artificial plant wall is composed of a number of base frames which are mutually spliced, the base frame being provided with insertion holes into which artificial plants are inserted. Chinese invention patent CN 106042758 A discloses a greening wall hanging, comprising a plastic substrate, wherein plastic sheets and insertion columns for insertion connection are formed at intervals on the front of the plastic substrate, and suction cups are provided at intervals on the back of the plastic substrate. The greening wall hanging has the advantages as follows: greening can be quickly operated on large-area wallboards, such as glass wallboards, plastic wallboards and marble wallboards; and moreover, the plastic sheets formed by integrated injection molding are uniformly distributed on the plastic substrate with ordered arrangement and highly aesthetic appearance, can be conveniently cleaned or replaced, and have no damage to the wallboard, thus being suitable for greening decoration without damage to wallboards.

In most manufacturing processes, a plastic substrate and artificial plants are respectively made, and finally the artificial plants are manually inserted into the plastic substrate. The plastic substrate is usually directly made by means of injection molding with a die, and the artificial plants can be manufactured in various ways.

For example, for a method for manufacturing artificial leaves, Chinese utility model of the application CN 208609986 U discloses a manufacturing apparatus for artificial plants, the manufacturing apparatus comprising a hydraulic press, wherein the hydraulic press is arranged on a cross rod, the hydraulic press is fixedly connected to a rotating device via a connecting rod, left and right sides of a lower end of the cross rod are respectively provided with a support rod, a rotating motor is provided inside the rotating device, a rotating plate is in transmission connection with the rotating motor, a stamping die and an extruder are provided at a lower end of the rotating plate, a lower end of the extruder is provided with an extrusion head, the center of a lower end of the stamping die is provided with a blowing hole, a stamping cutter is provided on an outer side of the blowing hole, and a lower die holder is provided right below the extruder. The hydraulic press is started to push the extruder to move downwards, the extrusion head extrudes a raw material to the lower die holder, the extruder moves upwards, the rotating motor works to rotate the rotating plate such that the stamping die is aligned with the lower die holder, the stamping die is pushed by the hydraulic press to stamp downwards, the stamping cutter cuts an artificial leaf in the lower die holder, and cold air is blown from the blowing hole for cooling and curing the artificial leaf.

For another example, for a method for manufacturing an artificial plant with a three-dimensional appearance, Chinese utility model of the application CN 203267041 U discloses a full-automatic molding apparatus for an artificial plant product, the apparatus comprising a compression molding part, a feeding part and a detection and control center, wherein the compression molding part comprises a first rack and an upper die and a lower die which are arranged on the first rack, the upper die and the lower die being driven by a driving device to close, and the upper die and the lower die being enclosed to form a die cavity for molding of an artificial plant product; the feeding part comprises a second rack, a material placement mechanism for placing a plant product material, and a feeding mechanism for feeding the plant product material into the die cavity, the feeding mechanism being driven into action by a driving device, and both the material placement mechanism and the feeding mechanism being mounted on the second rack; and the detection and control center comprises a central controller and a display, the central controller being respectively electrically connected to the driving devices of the compression molding part and the feeding part and being electrically connected to the display.

Although there are various proven techniques for the manufacturing method for artificial plants, there is no exception that the substrate and the artificial plants are manufactured separately and then inserted manually. Nowadays, with the increasing labor costs, the proportion of the insertion cost in the costs of artificial plant walls is getting higher and higher, and the efficiency of manual insertion is far behind the production efficiency of completely automated production of substrates and artificial plants, which has become a bottleneck restricting artificial plant wall products.

### SUMMARY OF THE INVENTION

In view of deficiencies of the prior art, the present invention provides an integrated artificial plant wall, which does not need manual insertion substrates or artificial plants, thus improving the working efficiency and reducing the labor cost.

In order to solve the above technical problems, the object of the present invention can be achieved by the technical solution as follows:
an integrated artificial plant wall, comprising a number of base frames which can be mutually spliced and a number of artificial plants, wherein the artificial plants are connected to the base frames via connecting rods, and the base frames, the artificial plants and the connecting rods are of an integrated structure.

The base frame has a shape, such as a triangular shape, a rhombic shape or a regular hexagon shape, which can be selected according to practical requirements, as long as achieving mutual splicing into a whole artificial plant wall. The base frame is preferably of a rectangular shape, comprising straight rods forming a rectangular outer frame and a number of intersecting cross-shaped or crossed cross-shaped straight rods forming an inner frame, taking both the cost and the structural strength into account.

The outer frame of the above base frame is provided with a number of splicing structures, the number of base frames are mutually spliced via the splicing structures, and the splicing structure uses a well-known splicing structure in the art, for example, the number of base frames are fixed via bolts, the number of base frames are snap-fitted via snap-fit fasteners, etc. The inner frame of the above base frame is provided with a number of fixing structures, the fixing structures are arranged at intersecting positions of the cross-shaped or crossed cross-shaped straight rods in the inner frame, and the fixing structure also uses a well-known fixing structure in the art, such as bolt fixing, hook fixing, suction cup fixing, etc.

The specific structure of the present invention will be described in detail below with an artificial leaf wall as an example, in which
the above artificial plants are leaves, and the connecting rods form simulated petioles.

A tail end of the above connecting rod is provided with a branched support rod, wherein the branched support rod is connected to a surface of the leaf, the branched support rod forms a simulated main leaf vein, the leaf is provided with indentations that are connected to the branched support rod, and the indentations form simulated small leaf veins.

The above leaves are arranged in a staggered manner and cover the whole base frame so as to achieve that the whole wall surface is covered with the artificial plants. The leaves may also be of various shapes, or simulated leaves of various plants, such as maple-shaped leaves and a heart-shaped leaves, are arranged in a staggered manner.

The leaves may also be made as matt leaves or make use of different color differences to create a color-rich and well-structured visual effect.

The above base frame, the artificial plant or the connecting rod is made of a material that has a well-known structure in the art, such as LDPE, EVA, PVC, TPE or TPR. The material of the base frame, the artificial plant and the connecting rod may be the same or different.

The present invention further provides a method for preparing the above integrated artificial plant wall, the method comprising the following steps:
(1) making flat leaves, in which the flat leaves are made by means of injection molding or casting compression molding;
(2) placing the flat leaves, in which the flat leaves are successively placed at the bottom of a die cavity;
(3) performing injection molding, in which an injection molding machine is used for injection molding operation to form base frames and connecting rods and bond the connecting rods to the leaves; and
(4) performing demolding, in which demolding is performed after injection molding to take down the integrated structure of the base frames, the artificial plants and the connecting rods.
the bottom of the above die cavity is provided with a three-dimensional simulated leaf structure and is also provided with a forming structure for indentations, and the leaf is pressed into a three-dimensional leaf having small leaf veins after injection molding.
the above integrated artificial plant wall is prepared using a full-automatic manufacturing apparatus, so that the operations of placing leaves and taking out finished products is completed with a robot arm, and the manufacturing apparatus is operated in a numerical control manner. Other well-known automated methods in the art may also be used at the same time.

Compared with the prior art, the present invention has the beneficial effects as follows:
The present invention is the first providing an integrated artificial plant wall, which no longer uses a traditional manual insertion method, thus reducing the labor cost, achieving completely automated production for artificial plant walls, greatly improving the production efficiency of artificial plant walls, and providing a foundation for large-scale industrialization of artificial plant walls.

### BRIEF DESCRIPTION OF THE DRAWINGS

- Fig. 1: is a perspective view of the present invention;
- Fig. 2: is a front view of the present invention;
- Fig. 3: is a top view of the present invention;
- Fig. 4: is a bottom view of the present invention; and
- Fig. 5: is a structural view of a leaf of the present invention.

Reference signs in the drawings: 1. Base frame; 1a. Outer frame; 1b. Inner frame; 2. Artificial plant; 3. Connecting rod; 4. Splicing structure; 5. Fixing structure; 6. Branched support rod; and 7. Indentation.

### DETAILED DESCRIPTION OF EMBODIMENTS

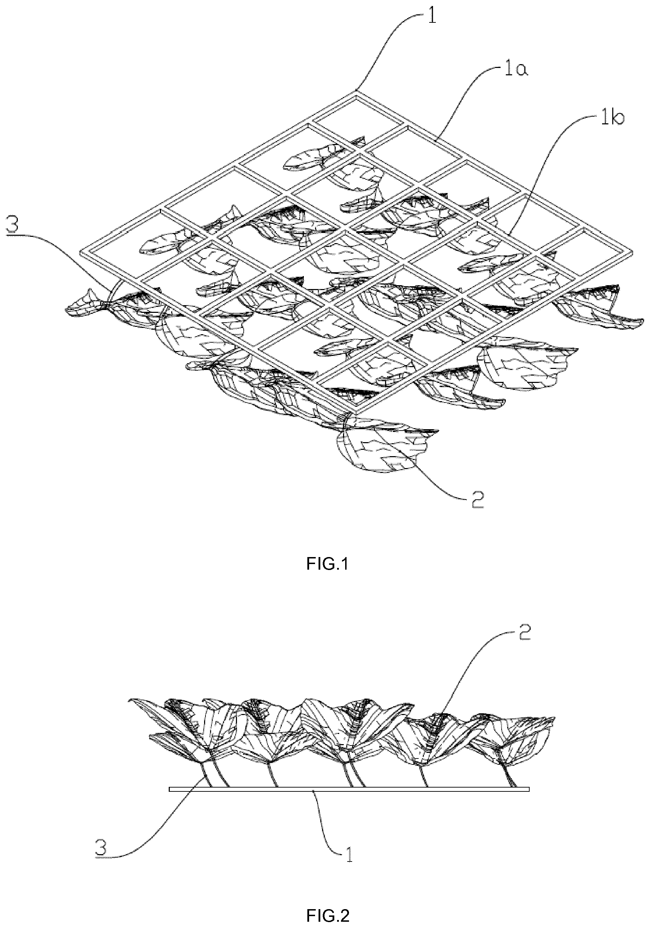

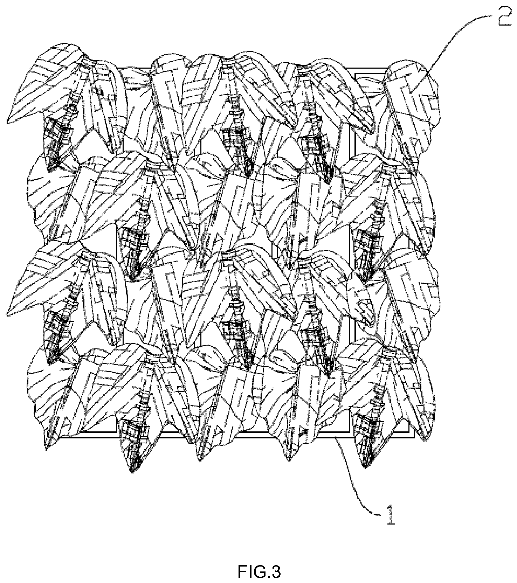

The present invention will be further described with a particular embodiment in conjunction with the accompanying drawings (see Figs. 1-5):
an integrated artificial plant wall, comprising a number of base frames 1 which can be mutually spliced and a number of artificial plants 2, wherein the artificial plants 2 are connected to the base frames 1 via connecting rods 3, and the base frames 1, the artificial plants 2 and the connecting rods 3 are of an integrated structure, so that a whole artificial plant wall can be formed by means of splicing the base frames 1.

The above base frame 1 has a shape, such as a triangular shape, a rhombic shape or a regular hexagon shape, which can be selected according to practical requirements, as long as achieving mutual splicing into a whole artificial plant wall.

With reference to Figs. 1-4, the above base frame is a rectangular base frame, which can be more conveniently spliced. The base frame 1 comprises straight rods forming a rectangular outer frame 1a and a number of intersecting cross-shaped or crossed cross-shaped straight rods forming an inner frame 1b, the straight rods may have a square cross section or a circular or quasi-circular cross section, and the radial dimension of the straight rod and the distance between the inner frame 1b and the straight rod may be selected according to requirements to take both the costs and the structural strength into account.

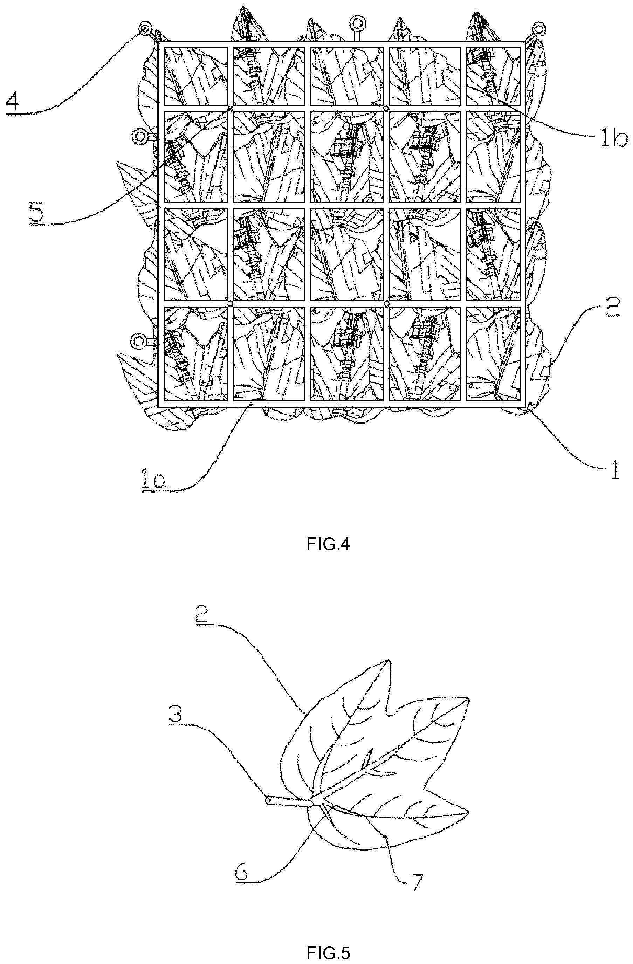

With reference to Fig. 4, the outer frame 1a of the above base frame 1 is provided with a number of splicing structures 4, the number of the base frames 1 are mutually spliced via the splicing structures 4, and the splicing structure 4 uses a well-known splicing structure 4 in the art, for example, the number of base frames 1 are fixed via bolts, the number of base frames 1 are snap-fitted via snap-fit fasteners, etc. In the figure, the splicing structures 4 are through holes through which fixing members can pass for fixing, and the splicing structures 4 are arranged at two adjacent edges of the rectangular base frame 1. The inner frame 1b of the above base frame 1 is provided with a number of fixing structures 5, the fixing structures 5 are arranged at intersecting positions of the cross-shaped or crossed cross-shaped straight rods in the inner frame 1b, and the fixing structure 5 also uses a well-known fixing structure in the art, such as bolt fixing, hook fixing, suction cup fixing, etc. In the figure, the fixing structures 5 are through holes through which fixing members pass for fixing to a wall.

With reference to Fig. 5, the specific structure of the present invention will be described in detail below with an artificial leaf wall as an example. Of course, the artificial plant wall of the present invention may also use other types of plants, such as petals, grasses, etc.

The above artificial plants 2 are leaves, and the connecting rods 3 form simulated petioles.

A tail end of the above connecting rod 3 is provided with a branched support rod 6, the branched support rod 6 is connected to a surface of the leaf, the branched support rod 6 forms a simulated main leaf vein, the leaf is provided with indentations 7 that are connected to the branched support rod 6, and the indentations 7 form simulated small leaf veins.

The above leaves are arranged in a staggered manner and cover the whole base frame 1 to achieve that a whole wall space is covered with the artificial plants 2. The leaves can also use various shapes or simulated leaves of various plants, such as a maple leaf and a heart-shaped leaf are arranged in a staggered manner.

The leaves may also be made as matt leaves or make use of different color differences to create a color-rich and well-structured visual effect.

The above base frame, the artificial plant or the connecting rod is made of a material that has a well-known structure in the art, such as LDPE, EVA, PVC, TPE or TPR. The material of the base frame, the artificial plant and the connecting rod may be the same or different.

The preparation method of the present invention will be described below with artificial leaves as an example, the preparation method comprising the following steps:
(1) making flat leaves, in which the flat leaves are made by means of injection molding or casting compression molding;
(2) placing the flat leaves, in which the flat leaves are successively placed at the bottom of a die cavity;
(3) performing injection molding, in which an injection molding machine is used for injection molding operation to form base frames and connecting rods and bond the connecting rods to the leaves; and
(4) performing demolding, in which demolding is performed after injection molding to take down the integrated structure of the base frames, the artificial plants and the connecting rods.

If it is necessary to make three-dimensional leaves or achieve a more realistic effect of leaves, the bottom of the above die cavity is provided with a three-dimensional simulated leaf structure and is also provided with a forming structure for indentations, and the leaf is pressed into a three-dimensional leaf having small leaf veins after injection molding.

The above integrated artificial plant wall is prepared using a full-automatic manufacturing apparatus, so that the operations of placing leaves and taking out finished products is completed with a robot arm, and the manufacturing apparatus is operated in a numerical control manner. Other well-known automated methods in the art may also be used at the same time.

Other types of artificial plant wall of the present invention can also be manufactured with reference to the above method, with the leaves being replaced with petals, grasses, etc.

The embodiment mentioned above is merely a preferred embodiment of the present invention and is not intended to limit the scope of protection of the present invention, and thus all equivalent variations made according to the structures, shapes and principles of the present invention shall be contained within the scope of protection of the present invention.

## Claims

1. An integrated artificial plant wall, comprising a number of base frames (1) which can be mutually spliced and a number of artificial plants (2), wherein the artificial plants (2) are connected to the base frames (1) via connecting rods (3), and the base frames (1), the artificial plants (2) and the connecting rods (3) are of an integrated structure.

2. The integrated artificial plant wall according to claim 1, wherein the base frame (1) is of a rectangular shape and comprises straight rods forming an outer frame (1a) and a number of intersecting cross-shaped or crossed cross-shaped straight rods forming an inner frame (1b).

3. The integrated artificial plant wall according to claim 2, wherein the outer frame (1a) of the base frame (1) is provided with a number of splicing structures (4), the number of base frames (1) are mutually spliced via the splicing structures (4), the inner frame (1b) of the base frame (1) is provided with a number of fixing structures (5), and the fixing structures (5) are arranged at intersecting positions of the cross-shaped or crossed cross-shaped straight rods in the inner frame (1b).

4. The integrated artificial plant wall according to claim 1, wherein the artificial plants (2) are leaves, and the connecting rods (3) form simulated petioles.

5. The integrated artificial plant wall according to claim 4, wherein a tail end of the connecting rod (3) is provided with a branched support rod (6), the branched support rod (6) is connected to a surface of the leaf, the branched support rod (6) forms a simulated main leaf vein, the leaf is provided with indentations (7) that are connected to the branched support rod (6), and the indentations (7) form simulated small leaf veins.

6. The integrated artificial plant wall according to claim 4, wherein the leaves are arranged in a staggered manner and cover the whole base frame.

7. The integrated artificial plant wall according to claim 1, wherein the base frame (1), the artificial plant (2) or the connecting rod (3) is made of a material of LDPE, EVA, PVC, TPE or TPR.

8. A method for preparing an integrated artificial plant wall, comprising the following steps:
(1) making flat leaves, in which the flat leaves are made by means of injection molding or casting compression molding;
(2) placing the flat leaves, in which the flat leaves are successively placed at the bottom of a die cavity;
(3) performing injection molding, in which an injection molding machine is used for injection molding operation to form base frames and connecting rods and bond the connecting rods to the leaves; and
(4) performing demolding, in which demolding is performed after injection molding to take down the integrated structure of the base frames, the artificial plants and the connecting rods.

9. The method for preparing an integrated artificial plant wall according to claim 8, wherein the bottom of the die cavity is provided with a three-dimensional simulated leaf structure and is also provided with a forming structure for indentations, and the leaf is pressed into a three-dimensional leaf having small leaf veins after injection molding.

10. The method for preparing an integrated artificial plant wall according to claim 8, wherein the integrated artificial plant wall is prepared using a full-automatic manufacturing apparatus, so that the operations of placing leaves and taking out finished products is completed with a robot arm, and the manufacturing apparatus is operated in a numerical control manner.
